# EUROPEAN PATENT SPECIFICATION

(11) **EP 1 271 757 B1**
(45) Date of publication and mention of the grant of the patent: **17.12.2003**
(21) Application number: 02017891.9
(22) Date of filing: 20.05.1998
(51) Int. Cl.: H02M 3/335, H02M 1/00

(54) **Power supply circuit and CCD camera using same**
Stromversorgungsschaltung und damit versorgte CCD-Kamera
Circuit d'alimentation de puissance et caméra CCD l'utilisant

(30) Priority: 22.05.1997 JP 13178797
(43) Date of publication of application: 02.01.2003
(62) Divisional of application: 98109228.1
(73) Proprietor: Sanyo Electric Co., Ltd., Moriguchi-shi, Osaka (JP)
(72) Inventor: Nagase, Kenji, Shijonawate-shi, Osaka (JP)
(74) Representative: Glawe. Delfs. Moll

(56) References cited:
- EP-A- 0 503 715
- EP-A- 0 676 854
- WO-A-96/28878
- US-A- 3 818 306
- PATENT ABSTRACTS OF JAPAN vol. 017, no. 383 (E-1400), 19 July 1993 (1993-07-19) & JP 05 064432 A (TOKYO ELECTRIC CO.), 12 March 1993 (1993-03-12)

## Description

This invention relates to a power supply circuit and a CCD camera using the same, and more particularly to a power supply circuit for supplying a positive polarity power voltage and a negative polarity power voltage, particularly, to a camera using a CCD imager or a display unit using an LCD panel, for example.

The motion-picture and/or still-picture cameras using, for example, a CCD imager usually require four power voltages of 3.3V, 5V, 15V and -7.5V, and accordingly use a positive/negative-voltage power supply circuit.

In the positive/negative-voltage power supply circuits, there is a necessity that each terminal of the CCD imager be satisfied by an absolute maximum rating of CCD when turning on or off a power switch of the camera. In particular, there may be a case that the above requirement cannot be satisfied due to a long discharge period of time (voltage attenuation time period) for a comparatively high voltage, such as 15V and -7.5V, upon turning off the power switch.

Meanwhile, the discharge time period during turning off the power is determined by a capacitance of a smoothing capacitor and an input impedance on a load (CCD imager) side. Therefore, the discharge time can be optimally set by adjusting a discharging resistance and a capacitance of a smoothing capacitor connected in parallel with the load. That is, the discharge time can be shortened by decreasing the capacitance of the smoothing capacitor and/or reducing the discharge resistance.

However, there is a limitation in decreasing the capacitance of the smoothing capacitor because there arises inconvenience in securing a performance, such as increase of noises, of a power supply circuit. On the other hand, the reduction in discharge resistance results in increase in steadily-consumable current (load current), giving rise to another problem such as lower in efficiency for the power supply circuit.

It is an object of this invention to provide a power supply circuit which can improve a starting characteristic of a fly-back circuit.

In the above-stated power supply circuit, however, the circuit for generating the negative polarity voltage may be omitted. In such a case, a power supply circuit according to the invention comprises: a chopper circuit for generating a low first voltage; a fly-back circuit for receiving the first voltage from the chopper circuit to generate a high second voltage; first and second terminals for respectively outputting the first and second voltages; and a diode connected between the first terminal and the second terminal in a forward direction of from the first terminal to the second terminal.

In this aspect, when a power switch of the camera for example is turned on, a power-on signal is outputted from a micro-computer of the camera. A PWM-switching controller, for example, is enabled in response to this power-on signal. The chopper circuit accordingly generates a first voltage. This first voltage is outputted to the first terminal, which in turn is outputted from the first terminal to the second terminal through the diode. Accordingly, when the chopper circuit is started, the second terminal immediately has a voltage outputted thereto. Then, if fly-back circuit is started and the second voltage exceeds over the first voltage, a reverse bias is applied to the diode and turns off the same diode.

In this manner, a first voltage from the chopper circuit is outputted at the first terminal, and simultaneous therewith a voltage output is given at the second terminal. Therefore, the starting characteristic is improved, and the absolute maximum rating of the CCD imager can be satisfied.

The power supply circuit is employed in a CCD camera so that respective first and second voltages are supplied to a CCD imager thereof.

The above described objects and other objects, features, aspects and advantages of the present invention will become more apparent from the following detailed description of the present invention when taken in conjunction with the accompanying drawings
Figure 1 is a circuit diagram showing an embodiment of this invention;
Figure 2 is a graph showing a starting characteristic in the embodiment, wherein time is represented by a horizontal axis and voltage by a vertical axis; and
Figure 3 is a graph showing a starting characteristic of a prior art lacking a diode of embodiment, wherein time is represented by a horizontal axis and voltage by a vertical axis.

A motion and/or still picture camera using, for example, a CCD imager usually requires a lower power voltage, such as 3.3V or 5V, and a higher power voltage, such as 15V. In the power supply circuit for a CCD camera, therefore, a lower voltage circuit is usually realized by means of a chopper method while a higher voltage circuit by a fly-back method using a transformer.

Accordingly, the power supply, at a start, is in such an output characteristic that is prolonged in start-up time for the higher voltage circuit, as compared to that of the lower voltage circuit. There may be a case that an absolute maximum rating is not satisfied for the CCD imager.

There is a limitation of transformer characteristic to shorten a start-up time for the higher voltage circuit. Due to this, it could be considered that the start-up time of the lower voltage circuit be increased to harmonize with the start-up time for the higher voltage circuit. However, where the high voltage circuit is formed in such a configuration as to receive an output from the lower voltage circuit so as to generate a higher voltage, if the start-up time be increased for the lower voltage circuit, the start-up time for the higher voltage circuit is also increased together therewith. That is, it is impossible to improve the above-stated starting characteristic by merely setting soft start.

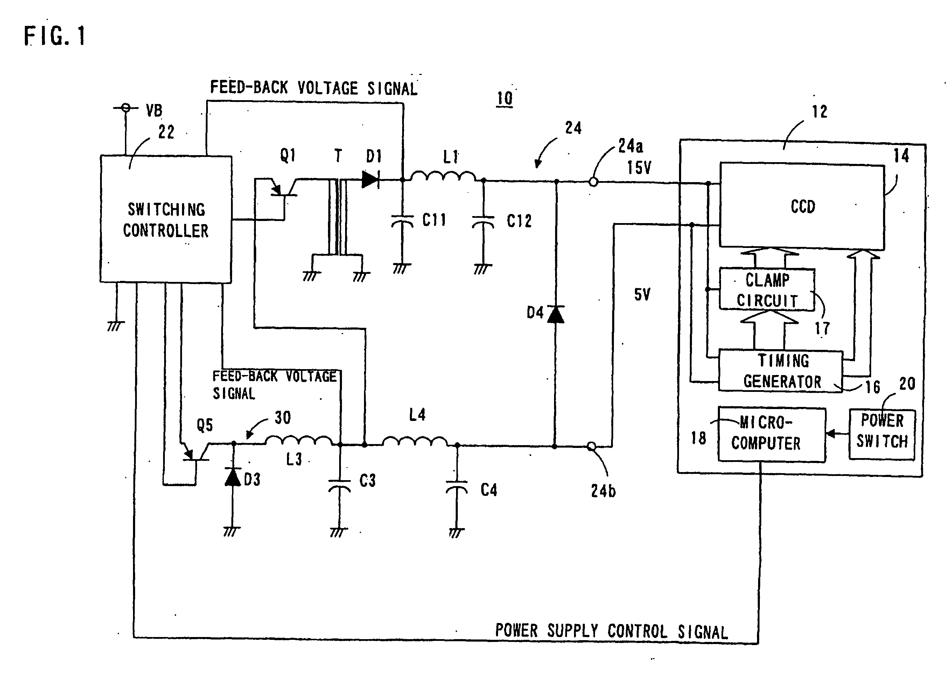

In order to solve such a problem an embodiment is illustrated in Fig. 1.

Referring to Figure 1, a power supply circuit 10, in this embodiment, is utilized as a power supply circuit of a camera 12. This camera 12 includes a CCD imager 14, a timing generator 16 for supplying various drive voltages to the CCD imager 14, and a clamping circuit 17. The CCD imager 14 and the timing generator 16, in this embodiment are each supplied with two power voltages of 15V and 5V from the power supply circuit 10. The clamping circuit 17 is supplied with 15V. The camera 12 further includes a micro-computer 18 to control the overall operation of the camera 12. This micro-computer 18 receives operational signals from the power switch 20. The micro-computer 18 operates on a power voltage of, e.g. 3.3V, not shown. When the power switch 20 is turned on, a power-on signal is outputted from the micro-computer 18, while if the power switch 20 is turned off, a power-off signal is outputted from the micro-computer 18. The power-on signal and the power-off signal are illustrated as power supply control signals in Figure 1.

The power supply circuit 10 includes a switching controller 22 so that this switching controller 22 is supplied with the above-stated power supply control signals. Accordingly, the switching controller 22 is enabled by the power-on signal, and disabled by the power-off signal. The switching controller 22 receives a power supply voltage VB, for example, from a battery (not shown) so that it outputs a switching signal to a base of a pnp transistor Q5 according to, for example, a PWM method. The transistor Q5, constituting a chopper circuit 30, has an emitter to receive the battery power voltage VB and a collector connecting with a fly-wheel diode D3. The chopper circuit 30 further includes a chopper coil L3 to receive a collector voltage of the transistor Q5, a smoothing capacitor C3, and a choke coil L4 and a capacitor C4 both connected to the smoothing capacitor C3. The chopper circuit 30 is a circuit to generate a lower power voltage, e.g. 5V. The lower power voltage generated by this chopper circuit 30 is outputted through the first terminal 24b, and supplied to the CCD imager 14 and the timing generator 16 of the CCD camera 12.

On the other hand, the output of the smoothing capacitor C3 of the chopper circuit 30 is supplied as an input voltage to a fly-back circuit 24 for generating a high power voltage. The fly-back circuit 24 includes a pnp transistor Q1, and an emitter of which receives a direct current supplied from the smoothing capacitor C3. A collector of the transistor Q 1 is connected to one terminal of a primary winding of a transformer T. The primary winding of the transformer T has another terminal being grounded.

The fly-back circuit 24 includes a rectifying diode D1 connected to one terminal of a secondary winding of the transformer T, a smoothing capacitor C11 for receiving a d.c. voltage from the diode D1, and a filter formed by a choke coil L1 connected to the smoothing capacitor C11 and a capacitor C12. The fly-back circuit 24 generates a higher power voltage, e.g. 15V, so that this 15V is outputted through the second terminal 24a to the CCD imager 14 of the CCD camera 12, the timing generator 16 and the clamping circuit 17 of the CCD camera 12.

In this embodiment, a diode D4 is connected between the first terminal 24b and the second terminal 24a in a forward direction of from the first terminal 24b to the second terminal 24a.

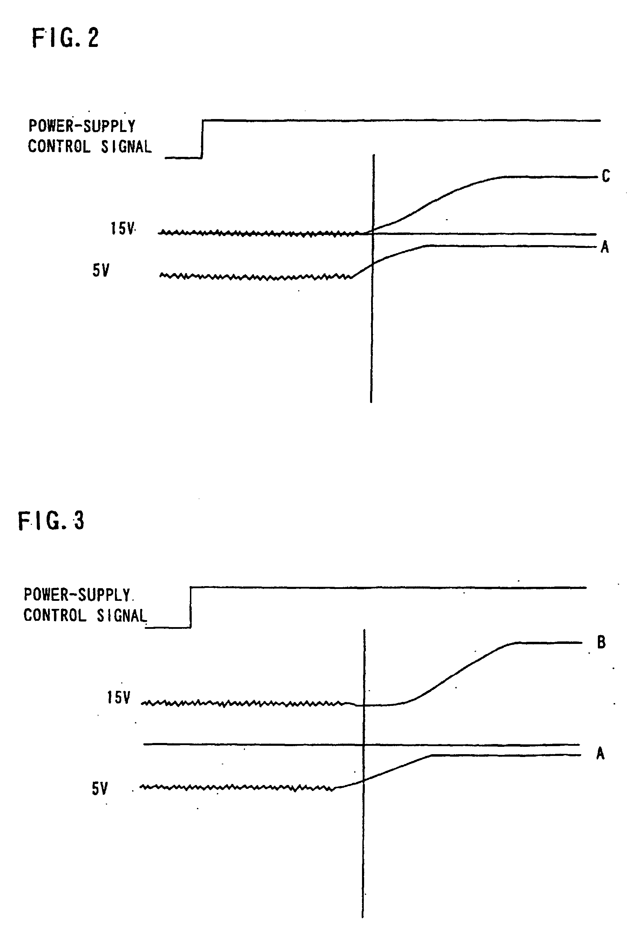

Responsive to turning-on of the power supply switch 20, the micro-computer 18 outputs a power-on signal, e.g. 5V. In response thereto, the switching controller 22 is enabled to start the chopper circuit 30 according to a well-known PWN method. Consequently, the first terminal 24b of the chopper circuit 30 has a power voltage according to starting characteristic of the chopper circuit 30, as shown by a line A in Figure 2. On the other hand, the fly-back circuit 24 has a long start-up time so that the second terminal 24a at this time has no power voltage output as shown by a line B in Figure 3. However, in the Figure 1 embodiment the first terminal 24b and the second terminal 24a has the diode D4 connected therebetween so that the voltage generated by the chopper circuit 30 is also supplied to the second terminal 24a through the diode D4. Accordingly, the second terminal 24a has an output voltage outputted simultaneously with the start of the chopper circuit 30, as shown by a line C in Figure 2. That is, if there is a difference between the timing of output of a power voltage through the first terminal 24b and the timing of output of a power voltage through the second terminal 24a as shown by the line B in Figure 3, it is impossible to fulfill the absolute maximum rating required by the CCD imager 14. However, if there is an approach between the timing of output through the first terminal 24b and the timing of output through the second terminal as in this embodiment, the above-stated absolute maximum rating can be satisfied.

Thereafter, when the fly-back circuit 24 is started and the voltage generated by the fly-back circuit 24 exceeds the voltage (5V) at the first terminal 24b, the diode D4 is reverse biased. Accordingly, no electric current flows from the second terminal 24a to the first terminal 24b. Therefore, both the two circuits 30 and 24 continue their normal operations.

Incidentally, in the Figure 1 embodiment, the first terminal 24b and the second terminal 24a were connected through the diode. However, this diode may be substituted by a transistor. However, where a transistor is used, an especial circuit is required to control the turning-on/off of the transistor. Therefore, it is preferred to use the diode for simplification.

## Claims

1. A power supply circuit, comprising:
a chopper circuit (30) for generating a low first voltage;
a fly-back circuit (24) for receiving the first voltage from said chopper circuit (30) to generate a high second voltage;
first and second terminals (24b, 24a)for respectively outputting the first and second voltages; and
a diode (D4) connected between said first terminal (24b) and said second terminal (24a) in a forward direction from said first terminal to said second terminal.

2. A camera, comprising:
a power supply circuit as claimed in claim 1 and
a CCD imager for receiving the first voltage and the second voltage through said first terminal and said second terminal.

## Patentansprüche

1. Spannungsversorgungsschaltungs mit:
einer Chopperschaltung (30) zur Erzeugung einer niedrigen ersten Spannung,
einer Rücklaufschaltung (24) zum Empfangen der ersten Spannung von der Chopperschaltung (30) zur Erzeugung einer hohen zweiten Spannung,
einem ersten und einem zweiten Anschluss (24b, 24a) zum jeweiligen Ausgeben der ersten und der zweiten Spannung und
einer Diode (D4), die zwischen den ersten Anschluss (24b) und den zweiten Anschluss (24a) in einer Vorwärtsrichtung von dem ersten Anschluss zu dem zweiten Anschluss geschaltet ist.

2. Kamera mit:
einer Spannungsversorgungsschaltung nach Anspruch 1, und
einem CCD-Bildwandler zum Empfangen der ersten Spannung und der zweiten Spannung durch den ersten Anschluss und den zweiten Anschluss.

## Revendications

1. Circuit d'alimentation de puissance, comprenant :
un circuit de découpage (30) pour générer une première tension, basse ; un circuit convertisseur haute-tension à retour-ligne (24) pour recevoir la première tension dudit circuit de découpage (30) afin de générer une seconde tension, haute ;
des première et seconde bornes (24b, 24a) pour la sortie respective des première et seconde tensions ; et
une diode (D4) connectée entre ladite première borne (24b) et ladite seconde borne (24a) dans une direction avant allant de ladite première borne à ladite seconde borne.

2. Caméra, comprenant :
un circuit d'alimentation en puissance selon la revendication 1 et
un imageur CCD pour recevoir la première tension et la seconde tension au travers de ladite première borne et de ladite seconde borne.
